# EUROPÄISCHE PATENTANMELDUNG

(11) **EP 3 366 965 A1**
(43) Veröffentlichungstag der Anmeldung: **29.08.2018**
(21) Anmeldenummer: 17157378.5
(22) Anmeldetag: 22.02.2017
(51) Int. Cl.: F16L 5/04, A62C 2/06, H02G 3/22

(54) **BRANDSCHUTZELEMENT UND BAUGRUPPE**

(71) Anmelder: HILTI Aktiengesellschaft, 9494 Schaan (LI)
(72) Erfinder: Münzenberger, Herbert, 65191 Wiesbaden (DE)
(74) Vertreter: Hilti Aktiengesellschaft Corporate Intellectual Property

(57) **Zusammenfassung**

Ein Brandschutzelement (10) zum Abschotten von durch Wände (50) oder Decken hindurchführenden Öffnungen (60), insbesondere von Leitungsdurchgängen, hat einen Kern (14) aus einem Füllmaterial, der sich entlang einer Achse (A) erstreckt. Ferner umfasst das Brandschutzelement (10) einen Rahmen (12) aus einem intumeszierendem Material, der fest mit dem Kern (14) verbunden ist und den Kern (14) zumindest abschnittsweise in einer Umfangsrichtung umgibt, die sich um die Achse (A) erstreckt. Das Brandschutzelement (10) hat zudem einen elastischen Dichtabschnitt (16), der fest mit dem Rahmen (12) verbunden ist und den Rahmen (12) in einer Umfangsrichtung umgibt, die sich um die Achse (A) erstreckt. Des Weiteren ist eine Baugruppe (100) mit einem solchen Brandschutzelement (10) und einer Wand (50) oder Decke vorgesehen, die einen Zwischenraum (52) mit einer Dicke (D) senkrecht zur Wand- bzw. Deckenoberfläche aufweist, wobei die Breite des Dichtabschnitts (16) in Richtung der Achse (A) zwischen 110% und 130%, vorzugsweise zwischen 115% und 125% der Dicke (D) des Zwischenraums (52) beträgt.

## Beschreibung

Die Erfindung betrifft ein Brandschutzelement zum Abschotten von durch Wände oder Decken hindurchführenden Öffnungen. Des Weiteren betrifft die Erfindung eine Baugruppe mit einem solchen Brandschutzelement und einer Wand oder Decke mit einem Zwischenraum.

Brandschutzelemente, die Leitungsdurchgänge mit nicht feuerfesten Rohren oder Kabeln in Decken oder Wänden im Brandfall schließen können, um eine Ausbreitung von Feuer und Rauch in Gebäuden zu verhindern, sind in verschiedensten Ausgestaltungen bekannt. Die Brandschutzelemente enthalten üblicherweise ein intumeszierendes Material, das um die Leitungen herum angeordnet wird, und ein Verstärkungselement, das das intumeszierende Material stabilisiert und im Brandfall den Verlust der schützenden Aschekruste verhindert bzw. verzögert.

Bei der Montage der bekannten Brandschutzelemente verbleibt nach dem Einsetzen des Brandschutzelements in die Öffnung ein Spalt, der extra abgedichtet werden muss. Hierzu sind ein weiterer Arbeitsschritt sowie zusätzliches Material und Werkzeug erforderlich.

Aufgabe der Erfindung ist es, ein Brandschutzelement bereitzustellen, mittels dem eine Öffnung effizienter abgeschottet werden kann.

Zur Lösung der Aufgabe ist ein Brandschutzelement zum Abschotten von durch Wände oder Decken hindurchführenden Öffnungen, insbesondere von Leitungsdurchgängen, mit einem Kern aus einem Füllmaterial vorgesehen, der sich entlang einer Achse erstreckt. Das Brandschutzelement hat einen Rahmen aus einem intumeszierendem Material, der fest mit dem Kern verbunden ist und den Kern zumindest abschnittsweise in einer Umfangsrichtung umgibt, die sich um die Achse erstreckt. Ferner umfasst das Brandschutzelement einen elastischen Dichtabschnitt, der fest mit dem Rahmen verbunden ist und den Rahmen in einer Umfangsrichtung umgibt, die sich um die Achse erstreckt. Der Dichtabschnitt umgibt den Rahmen in Umfangsrichtung vollständig und kontinuierlich, beispielsweise in Form eines Rings. Um das Brandschutzelement in eine abzuschottende Öffnung einzusetzen, kann das elastische Dichtelement komprimiert werden. Hierdurch wird der Umfang des Brandschutzelements in Umfangsrichtung reduziert und das Brandschutzelement kann mit geringem Kraftaufwand in die Öffnung eingeschoben werden. Anschließend dehnt sich das elastische Dichtelement von selbst aus und dichtet den Spalt zwischen dem Rahmen und der Wand ab. Auf diese Weise lässt sich mit dem Brandschutzelement eine Öffnung abschotten, ohne dass nach dem Einsetzen des Brandschutzelements ein Spalt mit zusätzlichem Material oder Werkzeug abgedichtet werden muss. Das elastische Dichtelement kann sich ferner an verschiedene Öffnungsquerschnitte anpassen, wodurch ein Brandschutzelement zum Abschotten für eine Vielzahl unterschiedlicher Öffnungen geeignet sein kann. Das Brandschutzelement ist darüber hinaus zum Abschotten von Wänden mit einem Zwischenraum geeignet, beispielsweise von Trockenbauwänden, die einen Hohlraum zwischen den beiden Außenwänden haben. Hierbei dehnt sich der Dichtabschnitt in den Zwischenraum aus und dichtet den Spalt zwischen dem Rahmen und der Außenwand ab, indem der Dichtabschnitt an der Innenseite anliegt, d.h. entgegengesetzt zur Außenseite der Trockenwand.

Es ist von Vorteil, wenn der Dichtabschnitt im Wesentlichen über den gesamten Umfang einen Überstand bildet, dessen Höhe senkrecht zur Oberfläche des Rahmens in Umfangsrichtung im Wesentlichen konstant ist. Somit hat der Dichtabschnitt eine gleichmäßige Dicke, wodurch das Brandschutzelement über den gesamten Umfang einen Spalt bis zur Höhe des Überstands abdichten kann. Das bedeutet, das Brandschutzelement weist in Umfangsrichtung konstante Dichteigenschaften auf und kann in verschiedenen Ausrichtungen in einer Öffnung montiert werden.

Der Überstand hat vorzugsweise senkrecht zur Oberfläche des Rahmens in Umfangsrichtung eine Höhe zwischen 3 mm und 30 mm, bevorzugt zwischen 5 mm und 20 mm. Damit ist der Überstand klein genug, damit das Brandschutzelement problemlos in eine für das Brandschutzelement vorgesehene Öffnung eingesetzt werden kann, wenn das Dichtelement zum Einsetzen zusammengedrückt wird. Gleichzeitig weist der Überstand eine ausreichende Höhe auf, um die Spaltmaße dicht zu verschließen, die üblicherweise zwischen dem Brandschutzelement und der Öffnung vorgesehenen sind.

In einer bevorzugten Ausführungsform hat der Dichtabschnitt zwei entgegengesetzt zueinander angeordnete Stirnflächen, die im Wesentlichen senkrecht zur Achse stehen. Das heißt, die axialen Enden des Dichtabschnitts sind stufenförmig ausgebildet. Hierdurch wird eine besonders gute Abdichtung gegen die Innenseiten einer Wand mit Zwischenraum sichergestellt, da die Stirnflächen parallel zu der Wandinnenseite angeordnet sind. Alternativ können die Stirnflächen auch in Richtung der Wandinnenseite geneigt sein, sodass der Anpressdruck mit zunehmendem Abstand von der Oberfläche des Rahmens ansteigt.

Der Dichtabschnitt kann in Richtung der Achse betrachtet im Wesentlichen in der Mitte des Brandschutzelements vorgesehen sein. Das bedeutet, der axiale Abstand des Dichtelements zu den beiden axialen Enden des Brandschutzelements ist gleich groß, wodurch das Brandschutzelement in beiden Einbaurichtungen symmetrisch gestaltet sein kann.

Die bevorzugte Breite des Dichtabschnitts in Richtung der Achse beträgt zwischen 60 mm und 70 mm. Auf diese Weise ist das Brandschutzelement besonders für Trockenbauwände mit einem Zwischenraum mit einer Dicke von 50 mm geeignet, wie sie üblicherweise in Europa verbaut werden, aber ebenso in üblichen US-Wänden verwendbar. Im montierten Zustand des Brandschutzelements wird der Dichtabschnitt in axialer Richtung durch die Außenwände zusammengedrückt, wodurch der Dichtabschnitt mittels einer Presspassung im Zwischenraum aufgenommen ist und den Spalt zwischen dem Rahmen und der jeweiligen Außenwand zuverlässig in axialer Richtung abdichtet.

Gemäß einer vorteilhaften Ausführungsform ist das Füllmaterial des Kerns und/oder der Dichtabschnitt ein elastischer Weichschaum. Zusätzlich oder alternativ weist das Füllmaterial und/oder der Dichtabschnitt im Wesentlichen keine Brandschutzadditive auf. Da der Rahmen aus intumeszierendem Material die Brandschutzeigenschaften des Brandschutzelements bereitstellt, kann ein Füllmaterial mit geringen oder keinen Brandschutzadditiven vorgesehen sein. Hierdurch ist das Brandschutzelement besonders kostengünstig herstellbar. Weichschäume haben den Vorteil, dass diese von einem Monteur zur Durchführung von Leitungen beispielsweise mit einer Lanze leicht durchstoßen werden können, wodurch die Montage beschleunigt wird. Im Fall des Dichtabschnitts hat ein Weichschaum den Vorteil, dass der Dichtabschnitt mit geringem Kraftaufwand komprimiert werden kann und somit die Montage vereinfacht wird. Zudem legt sich ein Weichschaum bei der Rückstellung formschließend an anliegende Flächen oder den Penetranten an und dichtet so besonders gut ab.

Es ist von Vorteil, wenn der Rahmen im Bereich des Dichtabschnitts wenigstens eine Ausnehmung aufweist und der Dichtabschnitt mit dem Kern, vorzugsweise einstückig, verbunden ist. Hierbei geht der Kern ohne Unterbrechung in den Dichtabschnitt über und erstreckt sich in radialer Richtung durch den Rahmen. Bevorzugt füllen der Kern bzw. der Dichtabschnitt die Ausnehmung vollständig aus, sodass in diesen Abschnitten eine formschlüssige Verbindung hergestellt ist. Auf diese Weise kann das Brandschutzelement besonders einfach und kostengünstig hergestellt werden, da der Kern und der Dichtabschnitt in einem Schritt in den Rahmen eingebracht bzw. im Rahmen ausgebildet werden können.

In einer weiteren bevorzugten Ausführungsform ist die wenigstens eine Ausnehmung in Richtung der Achse im Wesentlichen so breit wie der Dichtabschnitt in dieser Richtung. Das bedeutet, dass der Rahmen in radialer Richtung nicht zwischen dem Dichtabschnitt und dem Kern angeordnet ist und beispielsweise wie eine Manschette in Umfangsrichtung um den Kern angebracht sein kann. Der Vorteil dieser Gestaltung ist, dass das Dichtelement in radialer Richtung, d.h. senkrecht zur Achse, eingedrückt werden kann, ohne dass der Rahmen das Eindrücken im Wesentlichen behindert. Insbesondere kann hierdurch der Dichtabschnitt in radialer Richtung soweit komprimiert werden, dass der Umfang des Dichtabschnitts in Umfangsrichtung maximal so groß ist wie der Umfang des Rahmens in Umfangsrichtung. Auf diese Weise ist das Brandschutzelement für Öffnungen geeignet, deren Querschnitt im Wesentlichen dem Querschnitt des Brandschutzelements entspricht, da der Dichtabschnitt vollständig eingedrückt werden kann, sodass die Höhe des Überstands über den gesamten Umfang kleiner oder gleich Null beträgt.

Vorzugsweise ist der Rahmen durch die wenigstens eine Ausnehmung in Umfangsrichtung in zwei in axialer Richtung voneinander getrennte Rahmenabschnitte geteilt. Hierdurch kann das Brandschutzelement in axialer Richtung elastisch zusammengedrückt werden. Indem der Dichtabschnitt in axialer Richtung auf maximal die Breite des Zwischenraums komprimiert wird, lässt sich auf diese Weise das Brandschutzelement besonders einfach in Wände mit einem Zwischenraum einsetzen.

Der Rahmen kann durch ein Verstärkungselement verstärkt sein, um die Stabilität des Brandschutzelements zu verbessern. Das Verstärkungselement ist insbesondere durch eine Platte, Matte, ein Gitter oder ein Gewebe gebildet und besteht vorzugsweise aus Metall, Streckmetall, Glasfasern, Basaltfasern, Kohlenstofffasern oder Keramikfasern. Auch ein hybrider Aufbau des Verstärkungselements aus mehreren Materialien ist möglich. Diese Materialien weisen im Vergleich zum intumeszierendem Material des Rahmens eine höhere Temperaturbeständigkeit auf. Diese ist vorteilhaft, da das Verstärkungselement von der das intumeszierende Material aktivierenden Temperatur nicht beeinträchtigt wird und auf diese Weise seine stabilisierende Funktion auch im Brandfall ausüben kann. Die Verwendung einer Matte, eines Gitters oder eines Gewebes bietet eine gute Verbindung des Verstärkungselements mit dem intumeszierenden Material. Ferner behält ein Verstärkungselement mit einer solchen Struktur seine stabilisierenden Eigenschaften auch bei vereinzelten strukturellen Schäden bei.

Das Verstärkungselement ist vorzugsweise in Umfangsrichtung in der äußeren Oberfläche des Rahmens angeordnet ist. Das Verstärkungselement kann hierbei auch auf der äußeren Oberfläche des Rahmens angeordnet sein bzw. diese bilden. Auf diese Weise begrenzt der Rahmen die Ausbreitung des intumeszierenden Materials im Brandfall und ermöglicht so, die Expansion des intumeszierenden Materials nach innen zu lenken. Da sich somit das intumeszierende Material nicht mehr unkontrolliert in alle Richtungen ausbreitet, kann die Menge an intumeszierendem Material im Brandschutzelement reduziert werden, wodurch sich geringere Herstellungskosten ergeben.

Gemäß einer weiteren bevorzugten Ausführungsform sind zwei entgegengesetzte Seiten des Kerns im Wesentlichen nicht von dem Rahmen bedeckt. Das Brandschutzelement kann daher so in einer Öffnung angeordnet werden, dass die beiden freiliegenden Seiten des Kerns aus Füllmaterial im Wesentlichen parallel zu Wand bzw. der Decke ausgerichtet sind und die Seiten die von dem Rahmen bedeckt sind, in Richtung der Wand bzw. der Decke zeigen. Auf diese Weise können Leitungen durch das Brandschutzelement durchgeführt werden, ohne dass hierzu der Rahmen des Brandschutzelements durchstoßen werden muss. Dies vereinfacht die Montage und verhindert eine Beschädigung des Rahmens.

Das Brandschutzelement ist vorzugsweise im Wesentlichen quaderförmig. Diese Gestaltung hat den Vorteil, dass das Brandschutzelement kostengünstig herstellbar ist und raumeffizient gelagert sowie transportiert werden kann.

Der Dichtabschnitt kann zwischen den Stirnflächen beliebig gestaltet sein und beispielsweise aus zwei zueinander in axialer Richtung beabstandeten Ringen bestehen, die jeweils die Öffnung einer Außenwand abdichten. Wichtig ist dabei, dass die Stirnflächen des Dichtabschnitts einen ausreichend großen Druck auf die Innenseiten der Außenwände aufbringen, um die Spalte zuverlässig abzudichten.

Das intumeszierende Material ist vorzugsweise ein Hartschaum, insbesondere mit einer Dichte von 100 kg/m³ bis 600 kg/m³, bevorzugt mit einer Dichte von 200 kg/m³ bis 500 kg/m³.

Es ist von Vorteil, wenn der Rahmen ein Intumeszenzvolumen aufweist, das dafür vorgesehen ist, im Brandfall den durch den Rahmen gebildeten Querschnitt oder den Querschnitt der Öffnung zu verschließen. Auf diese Weise ist sichergestellt, dass das intumeszierende Material ausreicht, um die abzuschottende Öffnung im Brandfall sicher zu verschließen und einen effektiven Brandschutz zu gewährleisten.

Der Rahmen kann eine Stoßkante aufweisen, die durch ein erstes und ein gegenüberliegendes zweites Ende des Rahmens gebildet ist. An dieser Stoßkante ist der Rahmen durchtrennt und kann daher mit geringem Kraftaufwand beispielsweise mit einem Messer oder Schraubendreher geöffnet werden. Auf diese Weise ist ein weiterer Zugang zum Kern aus Füllmaterial bereitgestellt, der zusätzlich zu den freiliegenden Seiten des Kerns zur Installation von Leitungen genutzt werden kann. Ferner wird hierdurch das Entfernen des Brandschutzelements erleichtert, beispielsweise wenn das Brandschutzelement nach einem Brand ausgetauscht werden muss.

Das Brandschutzelement kann der vorliegenden Erfindung eignet sich auch dazu, das mehrere solcher Elemente neben- oder übereinandergestapelt werden können.

Gegenstand der Erfindung ist ferner eine Baugruppe mit einem erfindungsgemäßen Brandschutzelement und einer Wand oder Decke, die einen Zwischenraum mit einer Dicke senkrecht zur Wand- bzw. Deckenoberfläche aufweist. Die Breite des Dichtabschnitts in Richtung der Achse beträgt dabei zwischen 110% und 130%, vorzugsweise zwischen 115% und 125% der Dicke des Zwischenraums, wenn das Brandschutzelement nicht in der Öffnung eingesetzt ist. Eine solche Wand ist beispielsweise eine Trockenwand und umfasst zwei parallel angeordnete Außenwände, die den Zwischenraum bilden. Indem der Dichtabschnitt in axialer Richtung breiter ist als der Zwischenraum, ist der elastische Dichtabschnitt mittels einer Presspassung zwischen den beiden Außenwänden aufgenommen, wodurch eventuell vorhandene Spalte zwischen dem Rahmen und der Wand abgedichtet werden. Dabei sollte der Dichtabschnitt eine gewisse Breite nicht überschreiten, da sonst der Dichtabschnitt nicht oder nur schwer vollständig in den Zwischenraum eingebracht werden kann, wodurch die Dichteigenschaften des Dichtabschnitts reduziert sein können. Für Decken mit einem Zwischenraum gelten die obigen Ausführungen analog.

Weitere Vorteile und Merkmale ergeben sich aus der nachfolgenden Beschreibung in Verbindung mit den beigefügten Zeichnungen. In diesen zeigen:
- Figur 1 in einer perspektivischen Darstellung ein erfindungsgemäßes Brandschutzelement,
- Figur 2 in einer Schnittansicht das Brandschutzelement aus Figur 1,
- Figuren 3 bis 6 jeweils in einer Schnittansicht eine zweite, dritte, vierte und fünfte Ausführungsform eines erfindungsgemäßen Brandschutzelements,
- Figur 7 in einer Schnittansicht eine Wand mit einer Öffnung, und
- Figur 8 in einer Schnittansicht eine erfindungsgemäße Baugruppe mit einem Brandschutzelement in eingebautem Zustand.

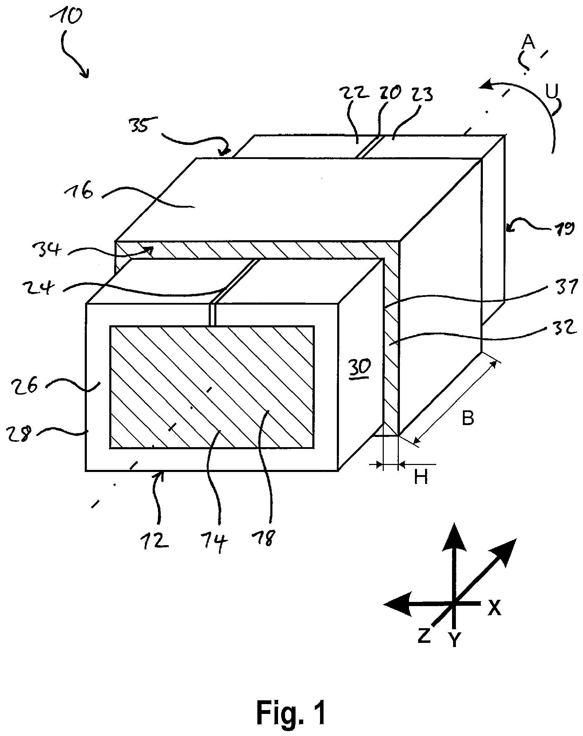

In Figur 1 ist ein erfindungsgemäßes Brandschutzelements 10 zum Abschotten von durch Wände oder Decken hindurchführenden Öffnungen, wie Leitungsdurchgänge, mit einem Rahmen 12, einem Kern 14 aus einem Füllmaterial und einem elastischen Dichtabschnitt 16 gezeigt.

Der Kern 14 erstreckt sich entlang der Achse A, die in Z-Richtung verläuft, und wird von dem Rahmen 12 in Umfangsrichtung U umschlossen, die sich um die Achse A erstreckt. Die beiden Stirnseiten 18, 19 des Kerns 14 bleiben dabei frei.

Das Füllmaterial des Kerns 14 ist ein PUR Weichschaum, der keine Brandschutzadditive enthält und im Wesentlichen schall- und rauchdicht ist.

In einer alternativen Ausführungsform ist das Füllmaterial des Kerns 14 ein PUR Hartschaum, der keine Brandschutzadditive enthält und im Wesentlichen schall- und rauchdicht ist.

Der Kern 14 ist dicht und fest, vorzugsweise stoffschlüssig, mit dem Rahmen 12 verbunden. Hierdurch ist sichergestellt, dass das Füllmaterial nicht aus dem Rahmen 12 herausgedrückt wird, wenn eine Leitung durch das Füllmaterial geführt oder eine Durchführung für eine Leitung im Füllmaterial gebildet wird. Ferner ist auf diese Weise die Rauch- und Schalldichtigkeit des Brandschutzelements 10 sichergestellt.

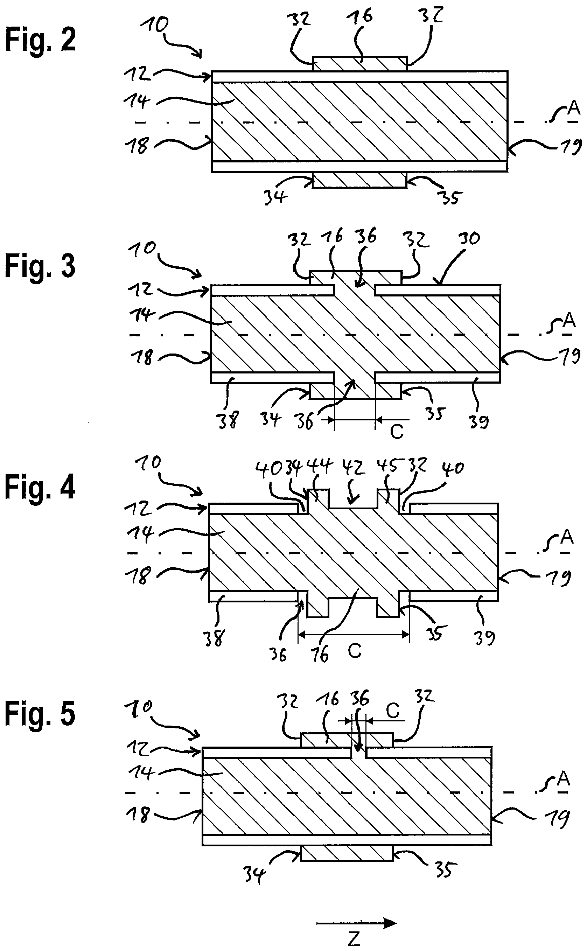

Der Rahmen 12 erstreckt sich kontinuierlich von einer Stirnseite 18 bis zur entgegengesetzt angeordneten anderen Stirnseite 19 des Kerns 14, wie in Figur 2 dargestellt ist, die das Brandschutzelement 10 in Y-Richtung durch die Achse A geschnitten und mit Blickrichtung in X-Richtung zeigt.

Der Rahmen 12 bedeckt den Kern 14 in Umfangsrichtung U bis auf einen schmalen Schlitz 20 vollständig. Der Schlitz 20 wird hierbei von zwei entgegengesetzt angeordneten Enden 22, 23 des Rahmens 12 gebildet, die sich auf einer Seite des Brandschutzelements 10 gegenüberliegen und eine Stoßkante 24 bilden.

In einer alternativen Ausführungsform kann der Rahmen 12 in Umfangsrichtung U geschlossen sein und keinen Schlitz 20 aufweisen.

Der Rahmen 12 ist aus einer Schicht 26 aus intumeszierendem Hartschaum gebildet und umfasst ein flächenförmiges Verstärkungselement 28, das auf der Schicht 26 aus intumeszierendem Hartschaum angebracht oder zumindest teilweise in der Schicht 26 aus intumeszierendem Hartschaum angeordnet ist. In beiden Fällen ist die Schicht 26 aus intumeszierendem Hartschaum fest mit dem Verstärkungselement 28 verbunden.

Die Schicht 26 aus intumeszierendem Hartschaum ist zwischen dem Kern 14 aus Füllmaterial und dem Verstärkungselement 28 angeordnet, das die äußere Oberfläche 30 des Rahmens 12 in Umfangsrichtung U bildet.

Der intumeszierende Hartschaum, aus dem die Schicht 26 gebildet ist, ist ein PIR- oder PUR-Schaum mit einer Intumeszenzkomponente umfassend einen Säurebildner (z.B. APP), einen Kohlenstofflieferanten bzw. Zuckerpolyol (z.B. Dipenta), einen NH₃-abspaltenden Gasbildner (z.B. aus der Gruppe Melamin, Guanidin, Melamincyanurat), Blähgraphit und gegebenenfalls Zinkborat und ATH.

Der intumeszierende Hartschaum hat eine Dichte von 200 kg/m³. Alternativ kann der intumeszierende Hartschaum eine Dichte aufweisen, die im Bereich von 100 kg/m³ bis 600 kg/m³ liegt.

Die Schicht 26 mit dem intumeszierenden Hartschaum hat ein Intumeszenzvolumen, das gewährleistet, dass die gesamte Fläche der Stirnseiten 18, 19 im Brandfall sicher verschlossen wird. Auf diese Weise ist sichergestellt, dass das Brandschutzelement 10 selbst dann eine Öffnung im Brandfall sicher verschließt, wenn der Kern 14 im Wesentlichen vollständig von Leitungen durchdrungen ist und/oder der Kern 14 fehlt.

Das Brandschutzelement 10 ist für Leitungen jeder Art vorgesehen, wobei der maximale Leitungsquerschnitt dem Querschnitt der Stirnseiten 18, 19 des Kerns 14 entspricht.

Das Verstärkungselement 28 besteht aus Streckmetall. In einer alternativen Ausführungsform kann das Verstärkungselement 28 aus einer Platte, einer Matte, einem Gitter oder einem Gewebe gebildet sein, welche(s) vorzugsweise aus Metall, Glasfasern, Basaltfasern, Kohlenstofffasern oder Keramikfasern besteht.

Der Rahmen 12 ist einstückig. Alternativ kann der Rahmen 12 aus mehreren miteinander verbundenen Abschnitten gebildet sein.

Es ist von Vorteil, wenn das Füllmaterial des Kerns 14 von dem intumeszierenden Material des Rahmens 12 einfach unterscheidbar ist, beispielsweise durch eine kontrastierende Farbgebung. Auf diese Weise wird dem Monteur angezeigt, welcher Bereich zum Durchführen von Leitungen vorgesehen ist, wodurch Anwendungsfehler, wie das Entfernen von intumeszierendem Material aus dem Rahmen 12, vermieden werden.

Der Schlitz 20 ist mit einer Einlage rauchgasdicht abgedichtet, die beispielsweise aus dem Füllmaterial des Kerns 14 oder dem intumeszierenden Material des Rahmens 12 gebildet ist.

Der Dichtabschnitt 16 umgibt den Rahmen 12 in Umfangsrichtung U und bildet einen geschlossenen Ring mit einer Breite B in Z-Richtung, der dicht und fest, vorzugsweise stoffschlüssig, mit dem Rahmen 12 verbunden ist.

Die Breite B beträgt 65 mm. Alternativ kann der Dichtabschnitt eine Breite zwischen 60 mm und 70 mm aufweisen, die für Trockenbauwände in Europa mit einem 50 mm breiten Zwischenraum besonders geeignet ist. Insbesondere für Wände mit einem schmaleren oder breiteren Zwischenraum kann der Dichtabschnitt 16 eine andere, für die entsprechende Wand geeignete Breite B haben.

Der Dichtabschnitt 16 bildet über den gesamten Umfang 31 des Rahmens 12 in Umfangsrichtung U einen Überstand 32 mit einer Höhe H senkrecht zur Oberfläche 30, die 18 mm beträgt. Alternativ kann der Überstand 32 zwischen 3 mm und 30 mm, vorzugsweise zwischen 5 mm und 20 mm betragen.

In einer alternativen Ausführungsform kann der Überstand 32 auf verschiedenen Seiten des Rahmens 12 unterschiedliche Höhen H und/oder eine nicht konstante Höhe H aufweisen. Hierbei ist lediglich wichtig, dass der Überstand 32 über den gesamten Umfang 31 eine minimale Höhe H nicht unterschreitet, die erforderlich ist, um einen entsprechenden Spalt zwischen dem Rahmen 12 und einer abzuschottenden Öffnung abzudichten.

In axialer Richtung Z wird der Dichtabschnitt 16 von zwei zueinander entgegengesetzt angeordneten Stirnflächen 34, 35 begrenzt, die senkrecht zur Achse A stehen und parallel zu den Stirnseiten 18, 19 ausgerichtet sind.

Der Abstand der Stirnflächen 34, 35 zu den Stirnseiten 18, 19 ist gleich groß, d.h. der Dichtabschnitt 16 ist in axialer Richtung Z in der Mitte des Kerns 14 bzw. des Rahmens 12 angeordnet.

Der Dichtabschnitt 16 ist aus einem elastischen Material gebildet, das insbesondere dasselbe Material ist, aus dem der Kern 14 besteht.

Ferner weist das elastische Material des Dichtabschnitts 16 im Wesentlichen keine Brandschutzadditive auf.

Der Kern 14 sowie der Rahmen 12 sind quaderförmig. Hierdurch hat das Brandschutzelement 10 im Wesentlichen die Gestalt eines quaderförmigen Blocks, der lediglich durch den Dichtabschnitt 16 in seiner Form von einem Quader abweicht. Alternativ kann das Brandschutzelement 10 zylinderförmig, insbesondere kreiszylinderförmig sein oder die Form eines Prismas haben, wodurch das Brandschutzelement 10 besonders zum Abschotten für Öffnungen geeignet ist, die einen entsprechenden Querschnitt wie die Grundfläche des Zylinders bzw. des Prismas aufweisen.

In den Figuren 3 bis 6 sind weitere Ausführungsformen eines erfindungsgemäßen Brandschutzelements 10 gezeigt, die sich lediglich durch die im Folgenden beschriebenen Merkmale von der in den Figuren 1 und 2 dargestellten ersten Ausführungsform unterscheiden. Für gleiche Strukturen mit gleichen Funktionen sind im Folgenden daher entsprechende Bezugszeichen vergeben.

In Figur 3 ist eine zweite Ausführungsform des Brandschutzelements 10 gezeigt, bei der der Rahmen 12 eine Ausnehmung 36 aufweist, die sich in Umfangsrichtung U erstreckt und den Rahmen 12 in zwei in axialer Richtung Z voneinander getrennte Rahmenabschnitte 38, 39 teilt.

Die Ausnehmung 36 ist im Bereich des Dichtabschnitts 16, insbesondere in der axialen Mitte des Dichtabschnitts 16 angeordnet.

Der Kern 14 erstreckt sich durch die Ausnehmung 36 und füllt diese vollständig aus.

Der Kern 14 und der Dichtabschnitt 16 sind einstückig ausgebildet. Alternativ kann der Dichtabschnitt 16 fest, insbesondere stoffschlüssig, mit dem Kern 14 verbunden sein.

Die Breite C der Ausnehmung 36 in axialer Richtung Z ist kleiner als die Breite B des Dichtabschnitts 16. Dies führt dazu, dass der Rahmen 12 abschnittsweise zwischen dem Kern 14 und dem Dichtabschnitt 16 angeordnet ist.

Es kann vorgesehen sein, dass der Dichtabschnitt 16 an der Oberfläche 30 nicht befestigt ist. Auf diese Weise lässt sich der Dichtabschnitt 16 in diesem Bereich besonders leicht in axialer Richtung Z zusammendrücken, da der Dichtabschnitt 16 in diesem Abschnitt über den Rahmen 12 geschoben werden kann.

In Figur 4 ist eine dritte Ausführungsform des Brandschutzelements 10 gezeigt, bei der die Ausnehmung 36 breiter ist als der Dichtabschnitt 16, wodurch zwischen dem Dichtabschnitt 16 und Rahmen 12 in axialer Richtung Z Lücken 40 gebildet sind.

In Figur 5 ist eine vierte Ausführungsform des Brandschutzelements 10 gezeigt, bei der die Ausnehmung 36 sich nicht vollständig in Umfangsrichtung U erstreckt sowie diese nicht mittig in axialer Richtung Z angeordnet ist.

Der Rahmen 12 kann ferner mehrere Ausnehmungen 36 aufweisen, die insbesondere in Umfangsrichtung U zwischen dem Dichtabschnitt 16 und dem Kern 14 angeordnet sind. Auf diese Weise kann der Kern 14 an mehreren Stellen mit dem Dichtabschnitt 16 verbunden sein, wodurch der Dichtabschnitt 16 einfacher einstückig mit dem Kern 14 herstellbar ist sowie beide stabiler miteinander verbunden sind.

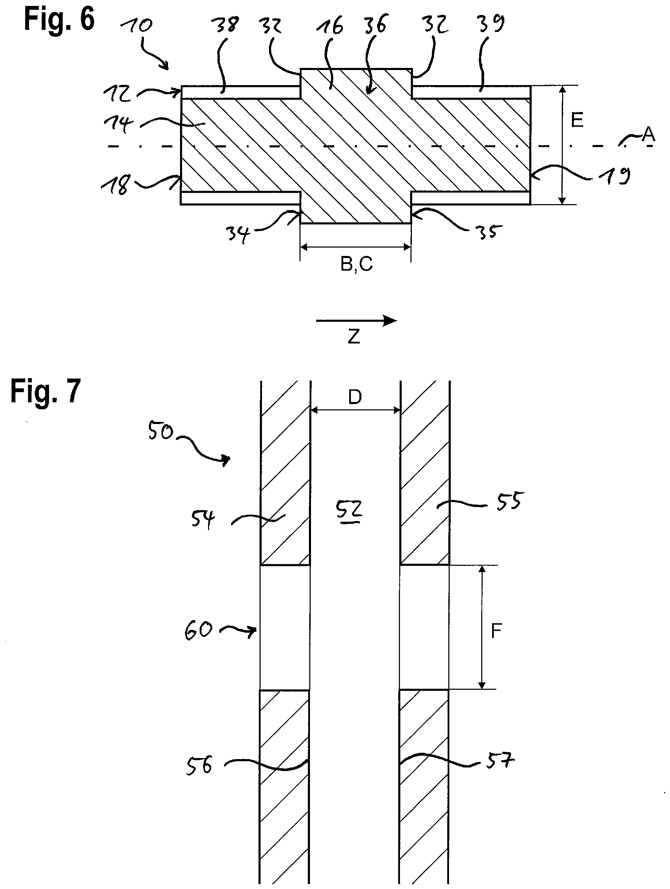

In Figur 6 ist eine fünfte Ausführungsform des Brandschutzelements 10 gezeigt, die im Wesentlichen der in Figur 3 gezeigten zweiten Ausführungsform entspricht, wobei die Breite C der Ausnehmung 36 der Breite B des Dichtelements 16 entspricht.

Bei allen Ausführungsformen kann der Dichtabschnitt 16 zwischen den Stirnflächen 34, 35 beliebig gestaltet sein, beispielsweise indem eine Nut 42 in Umfangsrichtung vorgesehen ist, die den Dichtabschnitt 16 in zwei konzentrische, in axialer Richtung Z beabstandete Ringe 44, 45 teilt (siehe Figur 4).

Die in Figur 6 gezeigte fünfte Ausführungsform des Brandschutzelements 10 ist Teil einer Baugruppe 100, die eine Wand 50 mit einem Zwischenraum 52 umfasst (siehe Figur 7).

Die Wand 50 ist beispielsweise eine Trockenbauwand und hat zwei parallele Außenwänden 54, 55, die beabstandet zueinander angeordnet sind und zwischen ihren Innenseiten 56, 57 den Zwischenraum 52 bilden.

Der Zwischenraum 52 ist im Wesentlichen leer und hat senkrecht zu den Außenwänden 54, 55 eine Dicke D von 50 mm.

Das Brandschutzelement 10 ist dafür vorgesehen, um eine Öffnung 60 in der Wand 50 abzuschotten.

Hierzu hat der Dichtabschnitt 16 eine Breite B von 65 mm.

Der Rahmen 12 weist einen Querschnitt E auf, der bis zu 20 mm, vorzugsweise bis zu 10 mm kleiner ist als der Querschnitt F der Öffnung 60. Dasselbe Verhältnis des Rahmens 12 zur Öffnung 60 gilt für die Abmessungen senkrecht zur Schnittebene.

Der Überstand 32 ist so bemessen, dass der Querschnitt E des Rahmens 12 zusammen mit dem Überstand 32 größer ist als der Querschnitt F der Öffnung 60, vorzugsweise um mindestens 3 mm größer. Weiter bevorzugt ist der Querschnitt E des Rahmens 12 zusammen mit dem Überstand 32 auf nur einer Seite des Rahmens 12 bereits größer als der Querschnitt F der Öffnung 60, sodass der Querschnitt F der Öffnung 60 auch dann verschlossen ist, wenn das Brandschutzelement 10 mit dem Rahmen 12 in der Öffnung 60 direkt an einer Außenwand 54, 55 an- bzw. aufliegt. Dasselbe gilt für die Abmessung des Überstands 32 senkrecht zur Schnittebene.

In einer alternativen Ausführungsform kann die Baugruppe eine Wand 50 mit einem Zwischenraum 52 umfassen, dessen Dicke D beliebig groß ist. In diesem Fall ist ein entsprechendes Brandschutzelement 10 für die Wand 50 vorgesehen, dessen Dichtabschnitt 16 eine Breite B hat, die 20% größer ist als die Dicke D des Zwischenraums 52. Alternativ kann die Breite B zwischen 10% und 30%, vorzugsweise zwischen 15% und 25% größer sein als die Dicke D.

Um die Öffnung 60 in der Wand 50 abzuschotten, wird das Brandschutzelement 10 in axialer Richtung Z in die Öffnung 60 eingeschoben. Hierzu wird der Dichtabschnitt 16 senkrecht zur Achse A zusammengedrückt, sodass der Überstand 32 soweit verringert ist, dass der Dichtabschnitt 16 durch die Öffnung 60 geschoben und in den Zwischenraum 52 eingesetzt werden kann.

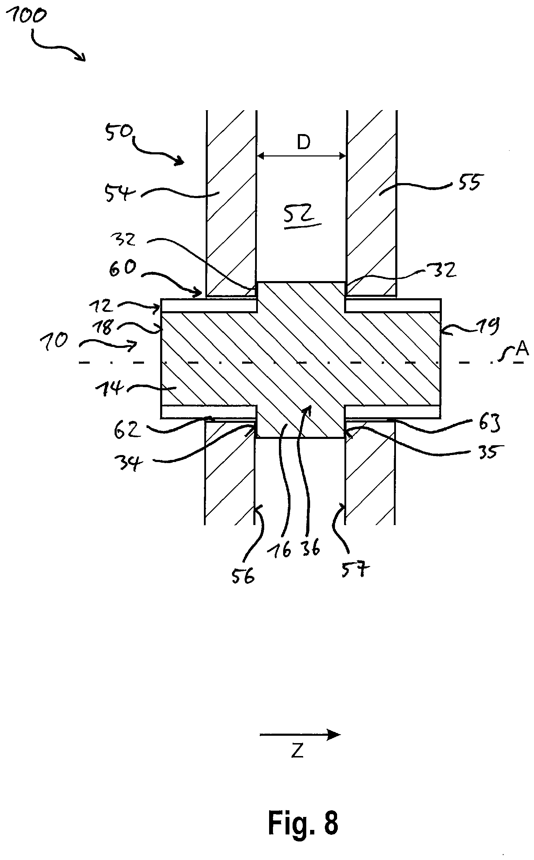

Das elastische Material des Dichtabschnitts 16 sorgt dafür, dass sich der komprimierte Dichtabschnitt 16 im Zwischenraum 52 ausdehnt und die Stirnfläche 35 an der Innenseite 57 der in Einschubrichtung Z hinteren Außenwand 55 zum Anliegen kommt (siehe Figur 8). Indem nun das Brandschutzelement 10 weiter in Richtung Z gedrückt wird, wird der Dichtabschnitt 16 in axialer Richtung Z gestaucht, bis die Breite B des Dichtabschnitts 16 sich soweit verringert hat, dass der Dichtabschnitt 16 vollständig in den Zwischenraum 52 einrastet.

Weist das Brandschutzelement 10 wie in dieser fünften Ausführungsform einen Rahmen 12 auf, der durch die Ausnehmung 36 in axialer Richtung Z geteilt ist, so kann der Dichtabschnitt 16 in axialer Richtung Z auch gestaucht werden, indem das Brandschutzelement 10 in axialer Richtung Z zusammengedrückt wird, beispielsweise an den Stirnseiten 18, 19.

Die Figur 8 zeigt das Brandschutzelement 10 im in der Öffnung 60 eingesetzten Zustand, in dem der Dichtabschnitt 16 im Zwischenraum 52 eingerastet ist. Hierbei liegen die Stirnflächen 34, 35 an den Innenseiten 56, 57 an und es sind ringförmige Spalte 62, 63 zwischen den Außenwänden 54, 55 und dem Rahmen 12 gebildet. Liegt der Rahmen 12 an einer oder mehreren seiner Seiten an zumindest einer der Außenwände 54, 55 an, so weicht die Form der Spalte 62, 63 entsprechend von einer Ringform ab.

Indem der Dichtabschnitt 16 in axialer Richtung Z auf die Dicke D des Zwischenraums 52 komprimiert wurde, wirken im elastischen Dichtabschnitt 16 Rückstellkräfte in axialer Richtung Z, die die Stirnflächen 34, 35 gegen die Innenseiten 56, 57 pressen und so die Spalte 62, 63 bzw. die Öffnung 60 in axialer Richtung Z abdichten.

Auf diese Weise ist die Öffnung 60 direkt nach dem Einsetzen des Brandschutzelements 10 abgeschottet, ohne dass hierzu weitere Arbeitsschritte, Materialien oder Werkzeuge erforderlich wären.

Auf dieselbe Weise können mit dem Brandschutzelement 10 Decken mit einem Zwischenraum 52 abgeschottet werden.

Das erfindungsgemäße Brandschutzelement 10 ist auch zum Abschotten von Wänden oder Decken ohne Zwischenraum geeignet. Hierbei dichtet der elastische Dichtabschnitt 16 die Öffnung ab, indem die Rückstellkräfte die Umfangs- bzw. Mantelfläche des Dichtabschnitts 16 senkrecht zur Achse gegen die Innenseite der Wand pressen.

Die Erfindung ist nicht auf die gezeigten Ausführungsformen beschränkt. Insbesondere können einzelne Merkmale einer Ausführungsform unabhängig von den anderen Merkmalen der entsprechenden Ausführungsform in einer weiteren erfindungsgemäßen Ausführungsform enthalten sein, d.h. die beschriebenen Merkmale sind beliebig kombinierbar.

## Patentansprüche

1. Brandschutzelement (10) zum Abschotten von durch Wände (50) oder Decken hindurchführenden Öffnungen (60), insbesondere von Leitungsdurchgängen, mit einem Kern (14) aus einem Füllmaterial, der sich entlang einer Achse (A) erstreckt, und einem Rahmen (12) aus einem intumeszierendem Material, der fest mit dem Kern (14) verbunden ist und den Kern (14) zumindest abschnittsweise in einer Umfangsrichtung (U) umgibt, die sich um die Achse (A) erstreckt, **dadurch gekennzeichnet, dass** das Brandschutzelement (10) einen elastischen Dichtabschnitt (16) umfasst, der fest mit dem Rahmen (12) verbunden ist und den Rahmen (12) in einer Umfangsrichtung (U) umgibt, die sich um die Achse (A) erstreckt.

2. Brandschutzelement nach Anspruch 1, **dadurch gekennzeichnet, dass** der Dichtabschnitt (16) im Wesentlichen über den gesamten Umfang (31) einen Überstand (32) bildet, dessen Höhe (H) senkrecht zur Oberfläche (30) des Rahmens (12) in Umfangsrichtung (U) im Wesentlichen konstant ist.

3. Brandschutzelement nach Anspruch 2, **dadurch gekennzeichnet, dass** die Höhe (H) des Überstands (32) senkrecht zur Oberfläche (30) des Rahmens (12) in Umfangsrichtung (U) zwischen 3 mm und 30 mm, vorzugsweise zwischen 5 mm und 20 mm beträgt.

4. Brandschutzelement nach einem der vorhergehenden Ansprüche, **dadurch gekennzeichnet, dass** der Dichtabschnitt (16) zwei entgegengesetzt zueinander angeordnete Stirnflächen (34, 35) aufweist, die im Wesentlichen senkrecht zur Achse (A) stehen.

5. Brandschutzelement nach einem der vorhergehenden Ansprüche, **dadurch gekennzeichnet, dass** der Dichtabschnitt (16) in Richtung der Achse (A) betrachtet im Wesentlichen in der Mitte des Brandschutzelements (10) vorgesehen ist.

6. Brandschutzelement nach einem der vorhergehenden Ansprüche, **dadurch gekennzeichnet, dass** die Breite (B) des Dichtabschnitts (16) in Richtung der Achse (A) zwischen 60 mm und 70 mm beträgt.

7. Brandschutzelement nach einem der vorhergehenden Ansprüche, **dadurch gekennzeichnet, dass** das Füllmaterial des Kerns (14) und/oder der Dichtabschnitt (16) ein elastischer Weichschaum ist und/oder im Wesentlichen keine Brandschutzadditive aufweist.

8. Brandschutzelement nach einem der vorhergehenden Ansprüche, **dadurch gekennzeichnet, dass** der Rahmen (12) im Bereich des Dichtabschnitts (16) wenigstens eine Ausnehmung (36) aufweist und der Dichtabschnitt (16) mit dem Kern (14), vorzugsweise einstückig, verbunden ist.

9. Brandschutzelement nach Anspruch 8, **dadurch gekennzeichnet, dass** die Breite (C) der wenigstens einen Ausnehmung (36) in Richtung der Achse (A) im Wesentlichen der Breite (B) des Dichtabschnitts (16) in Richtung der Achse (A) entspricht.

10. Brandschutzelement nach Anspruch 8 oder 9, **dadurch gekennzeichnet, dass** die wenigstens eine Ausnehmung (36) den Rahmen (12) in zwei voneinander getrennte Rahmenabschnitte (38, 39) teilt.

11. Brandschutzelement nach einem der vorhergehenden Ansprüche, **dadurch gekennzeichnet, dass** der Rahmen (12) ein Verstärkungselement (28) aufweist, insbesondere wobei das Verstärkungselement (28) durch eine Platte, Matte, ein Gitter oder ein Gewebe gebildet ist und vorzugsweise aus Metall, Streckmetall, Glasfasern, Basaltfasern, Kohlenstofffasern oder Keramikfasern besteht.

12. Brandschutzelement nach Anspruch 11, **dadurch gekennzeichnet, dass** das Verstärkungselement (28) in Umfangsrichtung (U) in der äußeren Oberfläche (30) des Rahmens (12) angeordnet ist.

13. Brandschutzelement nach einem der vorhergehenden Ansprüche, **dadurch gekennzeichnet, dass** zwei entgegengesetzte Seiten (18, 19) des Kerns (14) im Wesentlichen nicht von dem Rahmen (12) bedeckt sind.

14. Brandschutzelement nach einem der vorhergehenden Ansprüche, **dadurch gekennzeichnet, dass** das Brandschutzelement (10) im Wesentlichen quaderförmig ist.

15. Baugruppe (100) mit einem Brandschutzelement (10) nach einem der vorhergehenden Ansprüche und einer Wand (50) oder Decke, die einen Zwischenraum (52) mit einer Dicke (D) senkrecht zur Wand- bzw. Deckenoberfläche aufweist, **dadurch gekennzeichnet, dass** die Breite (B) des Dichtabschnitts (16) in Richtung der Achse (A) zwischen 110% und 130%, vorzugsweise zwischen 115% und 125% der Dicke (D) des Zwischenraums (52) beträgt.
